(19) Europäisches Patentamt
European Patent Office
Office européen des brevets

(11) **EP 2 697 901 B1**

(12) **EUROPÄISCHE PATENTSCHRIFT**

(45) Veröffentlichungstag und Bekanntmachung des Hinweises auf die Patenterteilung:
**22.07.2020  Patentblatt 2020/30**

(21) Anmeldenummer: **12725661.8**

(22) Anmeldetag: **21.05.2012**

(51) Int Cl.:
**B60L 9/28** *(2006.01)*

(86) Internationale Anmeldenummer:
**PCT/EP2012/059346**

(87) Internationale Veröffentlichungsnummer:
**WO 2012/160017 (29.11.2012 Gazette 2012/48)**

(54) **SPANNUNGSEINSTELLVORRICHTUNG**

VOLTAGE SETTING DEVICE

DISPOSITIF DE RÉGLAGE DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2011  DE 102011076199**

(43) Veröffentlichungstag der Anmeldung:
**19.02.2014  Patentblatt 2014/08**

(73) Patentinhaber: **Siemens Aktiengesellschaft 80333 München (DE)**

(72) Erfinder: **GLINKA, Martin 91080 Uttenreuth (DE)**

(56) Entgegenhaltungen:
**US-A- 6 005 788**

• RODRIGUEZ J ET AL: "Multilevel Voltage-Source-Converter Topologies for Industrial Medium-Voltage Drives", IEEE TRANSACTIONS ON INDUSTRIAL ELECTRONICS, IEEE SERVICE CENTER, PISCATAWAY, NJ, USA, Bd. 54, Nr. 6, 1. Dezember 2007 (2007-12-01), Seiten 2930-2945, XP011194602, ISSN: 0278-0046, DOI: 10.1109/TIE.2007.907044
• GLINKA M ET AL: "A New AC/AC Multilevel Converter Family", IEEE TRANSACTIONS ON INDUSTRIAL ELECTRONICS, IEEE SERVICE CENTER, PISCATAWAY, NJ, USA, Bd. 52, Nr. 3, 1. Juni 2005 (2005-06-01), Seiten 662-669, XP011133044, ISSN: 0278-0046, DOI: 10.1109/TIE.2005.843973
• RUDERMAN A ET AL: "A hybrid asymmetric cascaded multilevel inverter comprising high resolution and symmetric low resolution parts", ELECTRICAL AND ELECTRONICS ENGINEERS IN ISRAEL, 2008. IEEEI 2008. IEEE 25TH CONVENTION OF, IEEE, PISCATAWAY, NJ, USA, 3. Dezember 2008 (2008-12-03), Seiten 21-25, XP031399426, ISBN: 978-1-4244-2481-8
• ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541295, ISBN: 978-1-4244-4432-8
• STEFFEN ROHNER ET AL: "Modulation, Losses, and Semiconductor Requirements of Modular Multilevel Converters", IEEE TRANSACTIONS ON INDUSTRIAL ELECTRONICS, IEEE SERVICE CENTER, PISCATAWAY, NJ, USA, vol. 54, no. 8, 1 August 2010 (2010-08-01) , pages 2633-2642, XP011295533, ISSN: 0278-0046
• RODRIGUEZ J ET AL: "Multilevel Voltage-Source-Converter Topologies for Industrial Medium-Voltage Drives", IEEE TRANSACTIONS ON INDUSTRIAL ELECTRONICS, IEEE SERVICE CENTER, PISCATAWAY, NJ, USA, vol. 54, no. 6, 1 December 2007 (2007-12-01), pages 2930-2945, XP011194602, ISSN: 0278-0046, DOI: 10.1109/TIE.2007.907044

- **RUDERMAN A ET AL: "A hybrid asymmetric cascaded multilevel inverter comprising high resolution and symmetric low resolution parts", ELECTRICAL AND ELECTRONICS ENGINEERS IN ISRAEL, 2008. IEEEI 2008. IEEE 25TH CONVENTION OF, IEEE, PISCATAWAY, NJ, USA, 3 December 2008 (2008-12-03), pages 21-25, XP031399426, ISBN: 978-1-4244-2481-8**

## Beschreibung

Die Erfindung betrifft eine Spannungseinstellvorrichtung mit wenigstens einem mehrstufigen Spannungsausgang, zumindest einer Stromrichtereinheit, die wenigstens einen ersten Leistungsteil aufweist, welcher zumindest einen Teil eines Stromrichterzweigs bildet, und einer Steuereinheit, die den ersten Leistungsteil zur Bereitstellung einer Zweigspannung gemäß einer ersten Spannungsstufenstruktur steuert.

Solche Spannungseinstellvorrichtungen mit mehrstufigem Spannungsausgang, auch Ausgang mit Mehrpunktspannungen genannt, sind insbesondere in der Form von modularen Direktumrichtern bekannt. In dieser Ausführung wird eine Spannungsstufenstruktur bereitgestellt, bei welcher die Spannungsstufen identisch sind bzw. die verfügbaren Spannungsniveaus äquidistant sind. Dies entspricht einer Spannungsstufenstruktur mit "einheitlichen" Spannungsstufen. In solchen modularen Ausführungen sind in einem Stromrichterzweig sämtliche Module identisch aufgebaut. Beispielsweise ist ein derartiger Stromrichter in der DE 197 21 450 C1 offenbart.

Bei Spannungseinstellvorrichtungen mit mehrstufigen Ausgangsspannungen kann der Klirrfaktor des Spannungsausgangs deutlich reduziert werden, wenn die Stufenspannungsamplituden uneinheitlich verteilt werden bzw. die Stufenhöhen - gegenüber den oben erwähnten einheitlichen Ausgangsspannungen - unterschiedlich sind. Stromrichter, die Mehrpunktspannungen mit derartigen, "uneinheitlichen" Stufenspannungen erzeugen, sind in der englischsprachigen Literatur auch als "asymmetric multilevel Converter" bekannt.

Um uneinheitliche Ausgangsspannungen zu erzeugen wurde bereits vorgeschlagen, auf ein Hauptleistungsteil aufbauend, die mehrstufigen Ausgangsspannungen mit zusätzlichen, separaten Stromrichtern zu erzeugen, deren Topologie von der Topologie des Hauptleistungsteils abweicht. Dies ist z.B. in "Asymmetric multilevel converter for high resolution voltage phasor generation", Rufer, A. und Veenstra, M., EPE'99, Lausanne (1999), beschrieben. Nachteilig bei dieser Lösung sind die zusätzliche Schnittstelle und der Aufwand zur Realisierung von Redundanzen.

Der Erfindung liegt die Aufgabe zugrunde, eine gattungsgemäße Spannungseinstellvorrichtung bereitzustellen, bei welcher uneinheitliche Ausgangsspannungsstufen in einer besonders konstruktiv einfachen Bauweise erzeugt werden können.

Hierzu wird vorgeschlagen, dass die Stromrichtereinheit zumindest einen zweiten Leistungsteil umfasst, der mit dem ersten Leistungsteil den Stromrichterzweig bildet und eine Gruppe von Modulen aufweist, die jeweils zumindest einen Energiespeicher, eine Schaltergruppe und einen Modulausgang aufweisen, und die Steuereinheit in zumindest einem Steuermodus dazu vorgesehen ist, zumindest die Gruppe von Modulen zur Bereitstellung der Zweigspannung im Zusammenwirken mit dem ersten Leistungsteil gemäß einer zweiten, gegenüber der ersten Spannungsstufenstruktur feineren Spannungsstufenstruktur mit uneinheitlichen Stufenspannungen zu steuern. Durch die vorgeschlagene Merkmalskombination können uneinheitliche Ausgangsspannungsstufen mit einem besonders einfachen Aufbau der Stromrichtereinheit bereitgestellt werden. Mit der Bereitstellung einer gegenüber der ersten Spannungsstufenstruktur feineren Spannungsstufenstruktur können für die Zweigspannung Spannungsstufen erzeugt werden, die zwischen benachbarten Spannungsstufen der ersten Spannungsstufenstruktur liegen. Durch die aufgrund des Zusammenwirkens der Leistungsteile entstehende Kombination der Spannungsstufenstrukturen, die den Leistungsteilen zugeordnet sind, können für die Zweigspannung und daher den Spannungsausgang der Spannungseinstellvorrichtung, zu welchem die Zweigspannung beiträgt, uneinheitliche Spannungsstufen erzeugt werden.

Unter einer "Schaltergruppe" soll insbesondere eine Gruppe von Schaltelementen, wie insbesondere Halbleiterschaltern z.B. in der Form von IGBT-Transistoren, verstanden werden.

Die Polarität bzw. das Vorzeichen einer Modulausgangsspannung kann von der Steuereinheit durch die Steuerung der Schaltergruppe des jeweiligen Moduls eingestellt werden. Die Schaltergruppen weisen zweckmäßigerweise jeweils einen ersten Schaltzustand, der ein Aufladen des Energiespeichers bewirkt, einen zweiten Schaltzustand, der ein Entladen des Energiespeichers bewirkt und zumindest einen dritten Schaltzustand auf, in welchem das Modul am Modulausgang kurzgeschlossen ist, wobei die Energiespeicherspannung des Moduls zur Zweigspannung nicht beiträgt. Unter "vorgesehen" soll ferner insbesondere speziell ausgelegt, ausgeführt, ausgebildet, ausgestattet und/oder programmiert verstanden werden.

Die Erfindung eignet sich insbesondere zur Anwendung bei Mittel- und/oder Hochspannungen. Beispielweise kann die Spannungseinstellvorrichtung in einem Schienenfahrzeug angeordnet werden, in welchem eine von einer Leitung eines Bahnnetzes bezogene elektrische Spannung zur Energieversorgung zumindest der Antriebskomponenten des Fahrzeugs in zumindest einer Eigenschaft umwandelt wird. Die Spannung am Eingang der Spannungseinstellvorrichtung weist hierbei eine für eine Bahnnetzenergieversorgung typische Amplitude bzw. Frequenz auf.

In diesem Zusammenhang kann die vorgeschlagene Spannungseinstellvorrichtung eine vorteilhafte Anwendung zur Störstromkompensation bei einem Betrieb des Schienenfahrzeugs mit einem Gleichstrom (DC-Betrieb) finden. Die Spannungseinstellvorrichtung kann hierbei Bestandteil eines Mittelspannungsumrichters sein, der im DC-Betrieb typischerweise nicht genutzt wird.

Hierdurch können die üblicherweise zur Störstromkompensation eingesetzten, großen und schweren Filterkomponenten eingespart werden, und es kann eine aufwendige Anpassung bzw. Umkonfiguration eines bestehenden Mittelspannungsumrichters für die Anwendung als Störstromkompensator vermieden werden, wenn dieser erfindungsgemäß ausgestaltet ist.

Die Spannungseinstellvorrichtung kann ferner in einer Hochspannungs-Gleichstrom-Übertragung (HGÜ) eingesetzt werden. Hierbei ist sie für Eingangsspannungen ausgelegt, die vorzugsweise einen Wert über 100 kV aufweisen.

In einer bevorzugten Ausgestaltung der Erfindung wird vorgeschlagen, dass die erste Spannungsstufenstruktur
einheitliche Spannungsstufen aufweist. Hierdurch können zumindest für den ersten Leistungsteil herkömmliche Topologien eingesetzt werden.

Für die Ausbildung des ersten Leistungsteils sind dem Fachmann als sinnvoll erscheinende Topologien denkbar.
Um eine besonders einfache Schnittstelle zwischen den Leistungsteilen zu erreichen wird in einer vorteilhaften Ausführung der Erfindung jedoch vorgeschlagen, dass der erste Leistungsteil einen Satz von Modulen aufweist. Hierdurch
kann die Stromrichtereinheit insgesamt eine modulare Topologie aufweisen.

Diese Module des ersten Leitungsteils weisen vorzugsweise zumindest einen Energiespeicher, eine Schaltergruppe, und einen Modulausgang auf.

Der Aufbau der Stromrichtereinheit kann in diesem Zusammenhang ferner weiter vereinfacht werden, wenn
der erste Leistungsteil und der zweite Leistungsteil identische Module aufweisen. Hierdurch kann außerdem besonders
einfach eine vorteilhafte Redundanz im Fehlerfall erreicht werden.

In dieser Ausführung sind zumindest ein Modul des ersten Leistungsteils - oder zumindest eine Untergruppe
von Modulen des ersten Leistungsteils - und zumindest ein Modul des zweiten Leistungsteils - oder zumindest eine
Untergruppe von Modulen des zweiten Leistungsteils - identisch aufgebaut. In einer besonders vorteilhaften Ausbildung
sind die Module des ersten und des zweiten Leistungsteils identisch aufgebaut. Diese vorgeschlagene Ausführung weist
den Vorteil auf, dass eine bestehende, herkömmliche modulare Stromrichterstruktur mit identischen Modulen durch die
vorgeschlagene Ausführung der Steuereinheit zur Erzeugung uneinheitlicher Ausgangsspannungsstufen eingesetzt
werden kann, indem ein bestehender Satz identischer Module eines Stromrichterzweigs in zumindest zwei Untergruppen
unterteilt wird, die jeweils die Funktion des ersten bzw. des zweiten Leistungsteils aufweisen. Die Steuereinheit wird
hierbei im Steuermodus die Module dieser Untergruppen zweckmäßigerweise differenziert steuern. Alternativ kann eine
bestehende Stromrichterstruktur mit einem vorliegenden Satz von Modulen mit einem geringen Aufwand durch Hinzufügen weiterer, identischer Module zum bestehenden Satz angepasst werden. Im letzteren Fall kann die Notwendigkeit
einer aufwendigen Schnittstelle für die hinzugefügten Module entfallen. In einem Fehlerfall kann ein beliebiges Modul
des Stromrichterzweigs die Funktion eines ausgefallenen Moduls übernehmen.

Der Aufbau von zwei Modulen ist "identisch", wenn vorzugsweise zumindest die jeweiligen Schaltergruppen
der Module eine identische Topologie aufweisen. Die jeweiligen Energiespeicher können ferner identische physikalische
Eigenschaften aufweisen.

Bei dieser Ausführung der Stromrichtereinheit als modulare Stromrichtereinheit können unter Beibehaltung der
modularen Stromrichtereigenschaften somit bei geringem Zusatzaufwand die Stufenspannungsamplituden um ein Vielfaches gesenkt werden bzw. es können uneinheitliche Spannungsstufen mit deutlich erhöhter Stufenzahl erzeugt werden.
Ferner können die vorteilhaften Redundanzeigenschaften des modularen Stromrichters beibehalten werden.

Es kann ferner eine vorteilhafte Flexibilität erreicht werden, wenn die Steuereinheit dazu vorgesehen ist, eine
Zuordnung zumindest eines Moduls des Stromrichterzweigs zum ersten bzw. zum zweiten Leistungsteil zu ändern.
Diese Zuordnung kann insbesondere an Betriebsbedingungen angepasst werden, wie z.B. die individuellen Temperaturen der Leistungskomponenten der Leistungsteile. Somit kann ein ungewünschtes Erhitzen der Leistungskomponenten
vermieden werden.

Gemäß einer bevorzugten Ausführung wird vorgeschlagen, dass Module, vorzugsweise sämtliche Module,
zumindest des zweiten Leistungsteils jeweils zur Erzeugung einer bipolaren Modulausgangsspannung vorgesehen sind,
wodurch eine hohe Flexibilität in der Steuerung dieser Module erreicht werden kann.

In einer weiteren Ausführung wird vorgeschlagen, dass zumindest eine Schaltergruppe als Brückenschaltung
ausgebildet ist, wodurch ein besonders konstruktiv einfacher Aufbau der Stromrichtereinheit erreicht werden kann. Durch
den Einsatz von Brückenschaltungen kann ferner die Erfindung, welche sich insbesondere für Stromrichtereinheiten als
Direktumrichter eignet, bei modularen Zwischenkreisstromrichtern Anwendung finden. Hierbei können die uneinheitlichen Spannungsstufen mit Hilfe von Vollbrückenmodulen erzeugt werden.

Weist, wie oben vorgeschlagen, der erste Leistungsteil einen Satz von Modulen auf, kann hierbei der erste
Leistungsteil, abweichend vom zweiten Leistungsteil, wie bei modularen Zwischenkreisstromrichtern üblich, mit Schaltgruppen aus Halbbrückenschaltungen realisiert werden. Es ist aber auch aufgrund geringerer Kosten und besserer
Wirkungsgrade vorteilhafte Mischbestückung im ersten Leistungsteil aus Modulen mit Schaltgruppen aus Halbbrücken-
sowie Vollbrückenschaltungen möglich.

Gemäß einer in Bezug auf die vorgeschlagene Topologie des zweiten Leistungsteils vorteilhaften Ausführung
des Steuermodus wird im Steuermodus die Zweigspannung gemäß einem zu erreichenden Zweigspannungssollwert
durch ein Modulationsverfahren erzeugt, wobei während einer Modulationsperiode der erste Leistungsteil zu einem
Anteil des Zweigspannungssollwerts gemäß der ersten Stufenspannungsstruktur beiträgt und die Module des zweiten Leistungsteils die Differenz des Anteils zum Zweigspannungssollwert durch Modulation erzeugen.

Weist der erste Leistungsteil wie der zweiten Leistungsteil einen Satz von Modulen auf, wird in diesem Zusammenhang ferner vorgeschlagen, dass die Steuereinheit abhängig vom Zweigspannungssollwert und gemäß der ersten Spannungsstufenstruktur Module des ersten Leistungsteils ermittelt, die während der Modulationsperiode zur Zweigspannung beitragen. Die ggf. übrig bleibenden Module des ersten Leistungsteils tragen zur Zweigspannung vorzugsweise nicht bei, indem sie zweckmäßigerweise während der Modulationsperiode am Modulausgang kurzgeschlossen werden. Zur Ausbildung der Steuereinheit stehen für die Steuerung des ersten Leistungsteils herkömmliche Verfahren, die insbesondere an die Steuerung modularer Stromrichter angepasst sind, insbesondere Verfahren zur Erzeugung einheitlicher Stufenspannungen, zur Verfügung. Gemäß einem bekannten Verfahren wird insbesondere die Polarität bzw. das Vorzeichen der Modulausgangsspannungen der beitragenden Module des ersten Leistungsteils mit dem Zweigspannungssollwert gekoppelt, indem die Energiespeicherspannungen der beitragenden Module des ersten Leistungsteils mit der gleichen Polarität wie die Polarität der Zweigsollspannung zugeschaltet werden. Während der Modulationsperiode verbleibt zumindest ein überwiegender Teil der beitragenden Module des ersten Leistungsteils vorzugsweise permanent zugeschaltet, wobei zumindest ein Modul des ersten Leistungsteils am Modulationsverfahren mit Modulen des zweiten Leistungsteils teilnimmt.

In einer bevorzugten Ausführung der Erfindung legt die Steuereinheit gemäß der zweiten Spannungsstufenstruktur eine Kombination der Modulausgangsspannungen des zweiten Leistungsteils für die Modulationsperiode fest, wobei die Polarität der individuellen Modulausgangsspannungen während der Modulationsperiode unabhängig vom Zweigspannungssollwert ist. Hierdurch können trotz des geringen Energiegehalts der Energiespeicher des zweiten Leistungsteils die Modulausgangsspannungen von dessen Modulen optimal geregelt werden. Insbesondere kann für jedes Modul des zweiten Leistungsteils unabhängig vom Betriebszustand aller anderen Module festgelegt werden, ob in der Modulationsperiode der jeweilige Energiespeicher durch den Zweigstrom auf- oder entladen werden soll. Somit kann- anders als beim oben genannten Verfahren mit dem ersten Leistungsteil - die Polarität der Modulausgangsspannungen des zweiten Leistungsteils vom Zweigspannungssollwert entkoppelt durch die Steuereinheit frei gesteuert werden. Dies ermöglicht ein besonders präzises Annähern des Zweigspannungssollwertes durch Stufen der zweiten Stufenspannungsstruktur.

Des Weiteren wird vorgeschlagen, dass die Energiespeicher des zweiten Leistungsteils während der Modulationsperiode unterschiedliche Spannungen aufweisen. Somit kann durch eine Kombination der Modulausgangsspannungen im zweiten Leistungsteil eine besonders feine Stufenspannungsstruktur erreicht werden.

Weist der erste Leistungsteil einen Satz von Modulen auf, kann in diesem Zusammenhang eine besonders vorteilhafte Stufenspannungsstruktur erreicht werden, wenn während der Modulationsperiode zumindest ein Modul des ersten Leistungsteils eine Energiespeicherspannungsamplitude aufweist, die kleiner gleich der doppelten maximalen Energiespeicherspannungsamplitude des zweiten Leistungsteils ist. Unter der "Amplitude" einer Spannung V soll insbesondere der Betrag |V| verstanden werden. Dieses zumindest eine Modul des ersten Leistungsteils kann dessen Energie von den übrigen Modulen des ersten Leistungsteils und/oder von einer separaten Energieversorgungseinrichtung beziehen.

In einer weiteren vorteilhaften Ausbildung der Erfindung wird vorgeschlagen, dass zur Erzeugung der Zweigspannung gemäß dem Zweigspannungssollwert zwei dem Spannungssollwert am nächsten gelegenen Spannungsstufen ermittelt werden und eine zeitliche Mittelung der Spannungsstufen durch eine PWM-Flankentaktung über die Modulationsperiode den Zweigspannungssollwert abbildet. Hierdurch kann die Beteiligung weiterer, ungewünschter Stufenspannungen an der Mittelung zumindest vermindert, insbesondere verhindert werden.

Ferner wird vorgeschlagen, dass die Energiespeicher als Speicherkondensatoren ausgebildet sind, wodurch herkömmliche, gängige Hardwarestrukturen für die Stromrichtereinheit eingesetzt werden können.

Gemäß einer Weiterbildung der Erfindung wird vorgeschlagen, dass der Steuermodus zu- und abschaltbar ist, wodurch eine hohe Flexibilität in der Anwendung der Spannungseinstellvorrichtung erreicht werden kann. Weist die erste Spannungsstufenstruktur einheitliche Spannungsstufen auf, kann die Möglichkeit eines Wechsels zwischen der Erzeugung von einheitlichen und uneinheitlichen Mehrpunktspannungen abhängig von den Betriebsbedingungen (z.B. Normalbetrieb, Redundanzbetrieb oder Normalbetrieb unter anderen Betriebsbedingungen bzw. strengeren Anforderungen), erreicht werden.

Die Erfindung geht ferner aus von einem Verfahren zur Bereitstellung einer elektrischen Spannung mittels einer Spannungseinstellvorrichtung, die wenigstens einen mehrstufigen Spannungsausgang aufweist, bei welchem ein erster Leistungsteil, der zumindest einen Teil eines Stromrichterzweigs bildet, zur Bereitstellung einer Zweigspannung gemäß einer ersten Spannungsstufenstruktur gesteuert wird.

Es wird vorgeschlagen, dass zumindest ein zweiter Leistungsteil, der mit dem ersten Leistungsteil den Stromrichterzweig bildet und eine Gruppe von Modulen umfasst, die jeweils zumindest einen Energiespeicher, eine Schaltergruppe und einen Modulausgang aufweisen, gesteuert wird, wobei zumindest die Gruppe von Modulen zur Bereitstellung der Zweigspannung im Zusammenwirken mit dem ersten Leistungsteil gemäß einer zweiten, gegenüber der ersten Spannungsstufenstruktur feineren Spannungsstufenstruktur mit uneinheitlichen Stufenspannungen gesteuert wird.

Durch die vorgeschlagene Merkmalskombination können uneinheitliche Ausgangsspannungsstufen mit einem besonders einfachen Aufbau der Stromrichtereinheit bereitgestellt werden. Mit der Bereitstellung einer gegenüber der ersten Spannungsstufenstruktur feineren Spannungsstufenstruktur können für die Zweigspannung Spannungsstufen erzeugt werden, die zwischen benachbarten Spannungsstufen der ersten Spannungsstufenstruktur liegen. Durch die aufgrund des Zusammenwirkens der Leistungsteile entstehende Kombination der Spannungsstufenstrukturen, die den Leistungsteilen zugeordnet sind, können für die Zweigspannung und daher den Spannungsausgang der Spannungseinstellvorrichtung, zu welchem die Zweigspannung beiträgt, uneinheitliche Spannungsstufen erzeugt werden.

Es wird ein Ausführungsbeispiel der Erfindung anhand der Figuren erläutert. Es zeigen:

Figur 1: eine Antriebseinheit für ein Schienenfahrzeug, mit einer erfindungsgemäßen Spannungseinstellvorrichtung,
Figur 2: eine detaillierte Ansicht eines Stromrichterzweigs der Spannungseinstellvorrichtung und eines diesen Stromrichterzweig bildenden Moduls,
Figur 3: eine Stromrichtereinheit der Spannungseinstellvorrichtung und eine Steuereinheit,
Figur 4: ein Verfahren der Steuereinheit gemäß einem ersten Steuermodus,
Figur 5: eine Unterteilung des Stromrichterzweigs aus Figur 2 in zwei Leistungsteilen und
Figur 6: eine Stufenspannungsstruktur des Stromrichterzweigs aus Figur 5.

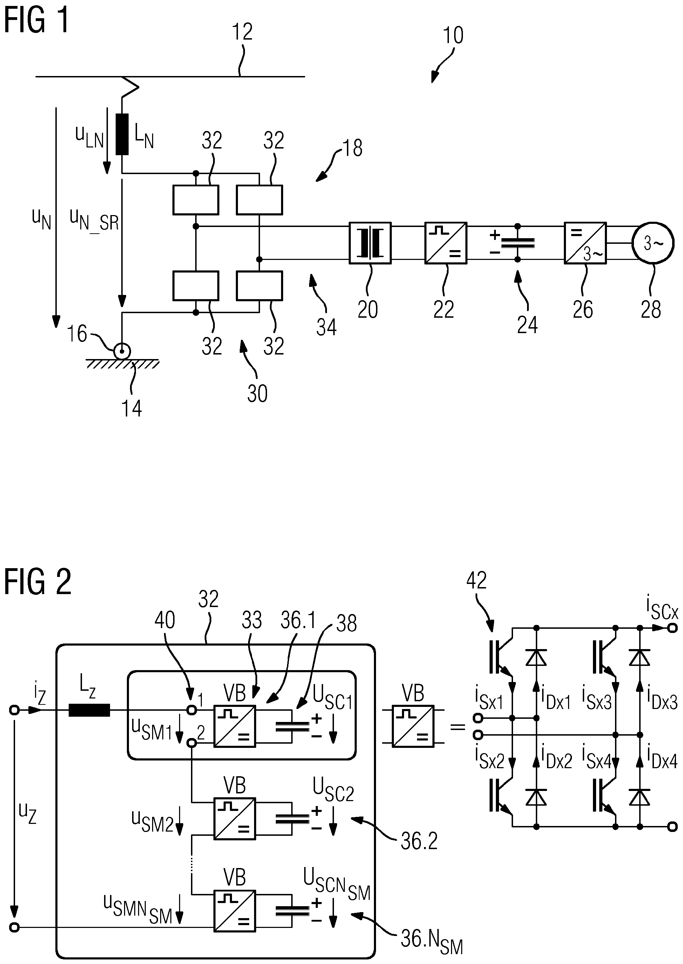

Figur 1 zeigt in einer schematischen Ansicht einer Antriebseinheit 10 für ein Schienenfahrzeug. In dieser Ansicht sind eine Oberleitung 12, eine Induktivität $L_N$, eine Schiene 14, die in Kontakt mit einem Rad 16 des Schienenfahrzeugs steht, eine Spannungseinstellvorrichtung 18, ein MittelfrequenzTransformator 20, ein Gleichrichter 22, ein Zwischenkreis 24, ein Frequenzumrichter 26 zur Erzeugung eines Antriebsdrehstroms, der in eine asynchrone Motoreinheit 28 eingespeist wird. Die von der Oberleitung geführte Spannung kann z.B. die Werte 15kV/16,7Hz oder 25kV/50Hz aufweisen. Es sind ferner die Spannungsabfälle der oben genannten, zwischen der Oberleitung 12 und dem Mittelfrequenztransformator 20 geschalteten Komponenten $L_N$ und 18 dargestellt.

Die Spannungseinstellvorrichtung 18 weist eine Stromrichtereinheit 30, die vier Stromrichterzweige 32 umfasst, und einen Spannungsausgang 34 auf. Die Stromrichtereinheit 30 ist im betrachteten Ausführungsbeispiel als modulare Stromrichtereinheit, und zwar insbesondere mit vier identischen Stromrichterzweigen 32 ausgebildet.

Figur 2 stellt die Ausführung der Stromrichterzweige 32 dar. Der Stromrichterzweig 32 umfasst einen Satz 33 von $N_{SM}$ Modulen 36.1 bis 36.$N_{SM}$, die in einer Kaskadenschaltung geschaltet sind.

Die Module 36 weisen jeweils eine Schaltergruppe VB auf, die in einer detaillierten Ansicht rechts von der Darstellung des Stromrichterzweigs 32 gezeigt ist. Außerdem umfassen die Module 36 jeweils einen Energiespeicher 38, der beispielsweise als Speicherkondensator ausgebildet ist, und einen Modulausgang 40. Die Energiespeicherspannungen bzw. Speicherkondensatorspannungen werden mit $U_{SCj}$ bezeichnet, wobei j=1...$N_{SM}$. Die Modulausgänge 40 weisen jeweils eine Modulausgangsspannung auf, die mit $u_{SMj}$ bezeichnet ist.

Der Kaskadenschaltung von Modulen 36 ist außerdem optional eine Induktivität $L_z$ vorgeschaltet, die in Einzelfällen für eine gezielte Regelung des Zweigstroms $i_Z$ vorteilhaft in den Stromrichterzweig 32 integriert werden kann.

Die Kombination der Modulausgangsspannungen $u_{SMi}$, bzw. deren Summe, entspricht der Zweigspannung $u_Z$.

Wie oben bereits erwähnt ist der Aufbau der Schaltergruppen VB in der Darstellung auf der rechten Seite der Figur 2 näher dargestellt. Die Schaltergruppe VB entspricht einer Anordnung von Halbleiterschaltern 42, die im betrachten Ausführungsbeispiel als Vollbrückenschaltung ausgebildet ist. In der betrachteten Ausführung weisen die Module 36 des Satzes 33 einen identischen Aufbau auf.

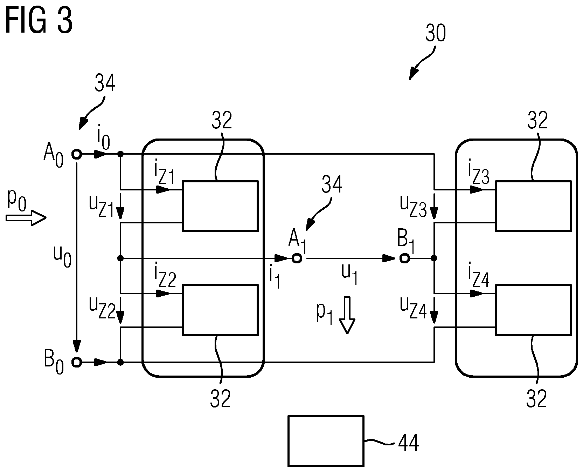

Figur 3 zeigt die Stromrichtereinheit 30 mit der Anordnung der Stromrichterzweige 32 und der Klemmen $A_0$, $B_0$, $A_1$, $B_1$ des Spannungsausgangs 34. Die Stromrichtereinheit 30 ist als einphasiger modularer Direktumrichter ausgebildet, der wie oben bereits erörtert vier identische Stromrichterzweige 32 aufweist. Jeder Stromrichterzweig 32 ist ein Zweipol, der an seinen Anschlussklemmen eine mehrstufige bipolare Spannung $u_{Zx}$ einprägt, wobei x=1...4.

Zur Steuerung der vier Zweigspannungen $u_{Z1}..u_{Z4}$ ist eine Steuereinheit 44 vorgesehen, die in Wirkverbindung mit den Stromrichterzweigen 32, und zwar insbesondere mit den Schaltergruppen VB der Module 36.i steht. Durch die Steuerung der vier Zweigspannungen $u_{Z1}..u_{Z4}$ entsprechend der Gleichungen (1) und (2) können die Klemmenspannungen $u_0$ und $u_1$ der Stromrichtereinheit 30 beliebig gesteuert werden. Damit die Schaltung diese beiden Spannungen uneingeschränkt einprägen kann, muss zu jedem Zeitpunkt die Gleichung (3) erfüllt sein.

$$u_{Z1} = u_{Z4} = (u_0-u_1) / 2 \qquad\qquad (1)$$

$$u_{Z2} = u_{Z3} = (u_0+u_1) / 2 \qquad\qquad (2)$$

$$\hat{u}_{Zx} \geq (\hat{u}_0 + \hat{u}_1) / 2 \qquad\qquad (3)$$

Durch eine Regelung der Zweigspannungen entsprechend der Gleichung (1) und (2) wird sichergestellt, dass sich die Klemmenströme $i_{Zi}$ auf die Stromrichterzweige 32 gleichmäßig aufteilen.

Es wird zunächst ein erster Steuermodus der Steuereinheit 44 erläutert.

In diesem Steuermodus erzeugt die Stromrichtereinheit 30 an ihren Klemmen mehrstufige Ausgangsspannungen mit näherungsweise konstanter Stufenhöhe. Diese Ausgangsspannungen sind auch als Ausgangsspannungen mit "einheitlichen Spannungsstufen" bezeichnet.

Die Anzahl der maximal möglichen unipolaren Spannungsstufen ($N$) an ihren Ausgangsklemmen kann zwischen beiden Spannungssystemen $u_0$ und $u_1$ beliebig aufgeteilt werden. Für sie gilt analog zur Gleichung (3) folgende Bedingung:

$$N_0 + N_1 = 2\, N_{SM} + 2 \qquad\qquad (4)$$

wobei $N_0$ der Anzahl der Spannungsstufen zwischen den Klemmen $A_0$ und $B_0$ und $N_1$ der Anzahl der Spannungsstufen zwischen den Klemmen $A_1$ und $B_1$ entsprechen.

Zur Steuerung der Module 36 zur Erzeugung mehrstufiger Ausgangsspannungen gemäß einer ersten Stufenspannungsstruktur mit einheitlichen Spannungsstufen sind Verfahren aus dem Stand der Technik bekannt. Abhängig von einer Vielzahl an Betriebsrandbedingungen können unterschiedliche Steuerverfahren zur Erzeugung der Stromrichterausgangsspannungen sinnvoll sein. Im Folgenden wird ein einfaches und robustes Pulsweitenmodulationsverfahren vorgestellt, das im Folgenden als "Standardverfahren" zur Erzeugung der Zweigspannungen $u_{Zx}$ bezeichnet wird. Das hier vorgestellte Pulsweitenmodulations-Standardverfahren ist ausgesprochen robust und es kann mit einem geringen Aufwand in einer Stromrichtersteuerung wie der Steuereinheit 44 implementiert werden.

Die Hauptmerkmale des Standardverfahrens sind die folgenden:

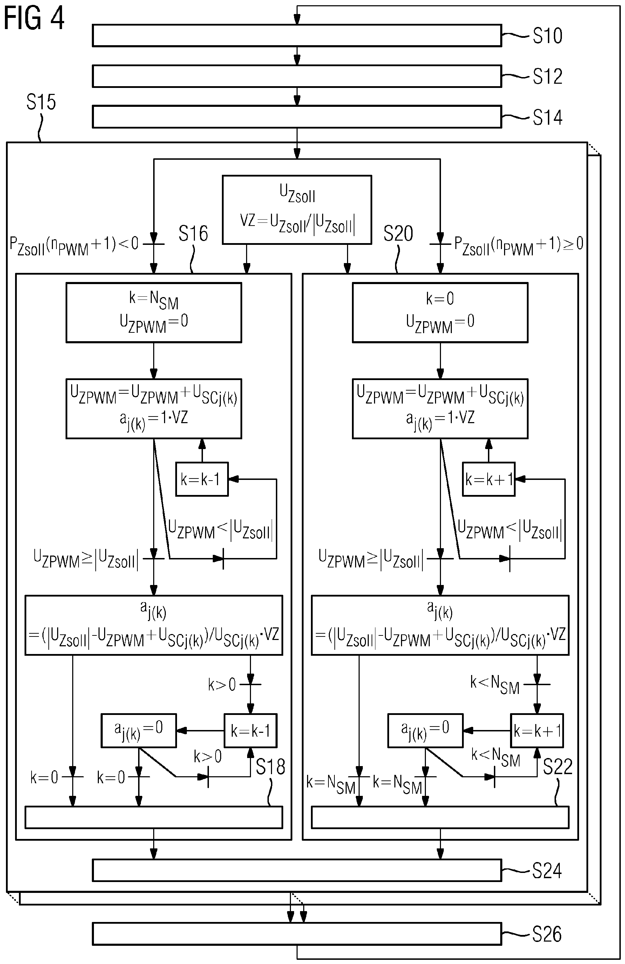

- Die Zweigspannungen $u_{Zx}$ werden durch die Steuereinheit 44 als Zweigspannungssollwerte $U_{Zsoll}$ vorgegeben und mit Hilfe eines PWM-Verfahrens (Pulsweitenmodulation) erzeugt, so dass für jede PWM-Periode die gemittelte Zweigspannung $u_{Zx}$ dem Zweigspannungssollwert $U_{Zsoll}$ entspricht;
- Je Stromrichterzweig 32 und PWM-Periode gibt es nur ein Modul 36, dessen Aussteuergrad (a) einen beliebigen Wert zwischen 0 und 1 hat. Alle anderen Module 36 des Zweigs 32 sind entweder über die gesamte PWM-Periode wechselspannungsseitig kurzgeschlossen (a=0) oder ihre Energiespeicherspannungen $U_{SCj}$ sind mit der gleichen Polarität, wie die Polarität der Zweigsollspannung, zugeschaltet ($|a|=1$);
- Für jedes Modul 36 wird der durch die Steuereinheit 44 festgelegte Modulaussteuergrad a mit einem zentralen Trägersignal verglichen, das für alle Module 36 der Stromrichtereinheit 30 identisch ist - z.B. einem Dreieck- oder Sägezahnsignal, wobei der Vergleich der Erzeugung der PWM-Schaltbefehle eines jeden Moduls 36 zugrunde liegt;
- Alle Modulaussteuergrade a werden entsprechend dem in Figur 4 dargestellten Flussdiagramm berechnet. Bei diesem Berechnungsalgorithmus werden in jeder PWM-Periode alle Speicherkondensatorspannungen $U_{SCj}$ der Stromrichtereinheit 30 ermittelt und an die Steuereinheit 44 übertragen.
- Anschließend findet je Stromrichterzweig 32 eine Sortierung aller Module 36 nach der Größe der Speicherkondensatorspannungen $U_{SCi}$ statt. Abhängig von der Betriebsart eines jeden Zweigs 32 in der anschließenden PWM-Periode - der Zweig 32 nimmt über die Periode gemittelt Energie auf oder gibt sie ab - werden so viele Module 36 zur Erzeugung der von der Steuereinheit 44 vorgegebenen Zweigspannung $U_{Zsoll}$ verwendet, wie gerade notwendig ist. Das zuletzt ausgewählte Modul 36 eines Zweiges 32 übernimmt dabei die Aufgabe, durch Pulsweitenmodulation die Zweigspannung $u_{Zx}$ so anzupassen, dass Sollwert und Istwert übereinstimmen. Die restlichen Module 36 des Zweigs 32 verbleiben über die gesamte PWM-Periode in einem einzigen Schaltzustand.

Figur 4 zeigt ein Flussdiagramm zum Standardverfahren zur Berechnung der PWM-Schaltbefehle aller Stromrichterzweige 32.

Nach diesem Standardverfahren werden folgende Schritte ausgeführt:

- S10: Einlesen aller Speicherkondensatorspannungen $U_{SCj}$ in der Periode $n_{PWM}$;
- S12: Sortierung aller Speicherkondensatorspannungen $U_{SCj}$ je nach Zweig 32 nach dem Größenindex k;
- S14: Berechnung der Sollspannungen und -ströme ($U_{Zsoll}$, $I_{Zsoll}$) aller Zweige 32 durch die Steuereinheit 44 für die folgende PWM-Periode $n_{PWM} + 1$;
- S15: Bestimmung der Aussteuergrade aller Module 36 eines Stromrichterzweigs 32;

Die Wahl des Schrittes S16 oder S20 erfolgt in Abhängigkeit der Größe $P_{Zsoll}(n_{PWM}+1)$. Falls der jeweilige Stromrichterzweig 32 während der nächsten Modulationsperiode $n_{PWM}+1$ Energie abgeben soll, ist $P_{Zsoll}(n_{PWM}+1) < 0$. Wenn der Stromrichterzweig 32 Energie aufnehmen soll oder seinen Energieinhalt konstant lassen soll ist $P_{Zsoll}(n_{PWM}+1) > 0$ bzw. $P_{Zsoll}(n_{PWM}+1) = 0$ erfüllt.

- S16: Erzeugung der PWM-Zweigspannung mit den größten Speicherkondensatorspannung $U_{SCj}$ ;
- S18: Aussteuergrade eines Zweigs 32 sind für die PWM-Periode $n_{PWM} + 1$ bestimmt; oder
- S20: Erzeugung der PWM-Zweigspannung mit den kleinsten $U_{SCj}$;
- S22: Aussteuergrade eines Zweigs 32 sind für die PWM-Periode $n_{PWM} + 1$ bestimmt;
- S24: Übermittlung der Aussteuergrade eines jeden Zweigs an die zentrale Steuereinheit 44 für die Periode $n_{PWM} + 1$;
- S26: Beginn der PWM-Periode $n_{PWM} + 1$ (synchron für alle Stromrichterzweige) und die Periodenzahl $n_{PWM}$ wird inkrementiert: $n_{PWM} := n_{PWM} + 1$.

In Figur 4 wird folgende Indexkonvention verwendet:

j : Laufindex für die Module 36 eines Zweigs 32;
k : Laufindex für die nach der Speicherkondensatorspannung $U_{SCj}$ sortierten Module 36 (k=0 für das Modul mit der kleinsten Spannung des Zweigs und k=$N_{SM}$ für das Modul mit der größten Spannung des Zweigs);
j(k) : Index der Module 36 eines Zweigs 32 entsprechend der Sortierung nach dem Index k;
$n_{PMM}$ : Index der aktuell ausgeführten PWM-Periode
$n_{PWM}+1$ : Index der folgenden PWM-Periode

Es wird nun ein zweiter Steuermodus der Steuereinheit 44 erläutert. Der zweite Steuermodus dient zur Erzeugung einer Mehrpunktspannung eines jeden Stromrichterzweigs 32 mit uneinheitlichen Stufenspannungen.

Dem hier vorgeschlagenen zweiten Steuermodus liegen die folgenden, allgemeinen Betrachtungen zugrunde.

Die Anzahl der Module 36 des modularen Direktumrichters mit einer Mehrpunktspannung aus einheitlichen Stufenspannungen ist mit der Gleichung (4) definiert. Erweitert man die Anzahl der Module 36 ($N_{SM}$) um $N_{PWM}$ baugleiche Module 36 je Zweig 32 zur Erzeugung einer pulsweitenmodulierten Ausgangsspannung mit uneinheitlichen Stufenspannungen, dann erhöht sich die effektive Anzahl der Spannungsstufen des modularen Direktumrichters auf folgenden Wert:

$$N_0 + N_1 = 2^{N_{PWM}} (2N_{SM}) + 2 \qquad\qquad (5)$$

Die maximale Ausgangsspannung der Stromrichtereinheit 30 bleibt trotz der Erhöhung der Gesamtzahl der Module 36 je Zweig 32 konstant, weil die zusätzlichen $N_{PWM}$ Module, die zur Erzeugung der Pulsweitenmodulation verwendet werden, nicht zu einem Anstieg dieser beitragen. Die maximale Zweigspannung kann theoretisch ohne die zusätzlichen $N_{PWM}$ Module erzeugt werden. Dies wird dadurch erreicht, dass die Summe aller Energiespeicherspannungen der Module 36 des ersten Leistungsteils 46 größer bzw. gleich der maximalen Zweigspannung ist.

Dies stellt einen Freiheitsgrad zur Verfügung, durch welchen die Modulausgangsspannungen der zusätzlichen Module 36 unabhängig vom Zweigspannungssollwert $U_{Zsoll}$ durch die Steuereinheit 44 geregelt werden können, wie unten näher erläutert. Durch diesen Freiheitsgrad besteht die Möglichkeit zur optimalen Regelung der Energiespeicherspannungen der zusätzlichen Module 36 bei einer begrenzten Energiespeicherkapazität der Energiespeicher 38.

Vergleicht man die Gleichungen (4) und (5), ist zu erkennen, dass mit bereits einem zusätzlichen Modul 36 je Zweig 32 die effektive Stufenzahl der Ausgangsspannung verdoppelt wird. Entsprechend reduzieren sich um den gleichen Faktor die Stromoberschwingungen in der Last.

Es handelt sich bei diesem Verfahren um eine Pulsweitenmodulation mit uneinheitlicher Stufenspannung mit dem partiellen Symmetriefaktor von 2 (Vervielfachung der Stufenzahl um $2N_{PWM}$).

Zur Ausführung des zweiten Steuermodus sind zumindest zwei Ausführungsvarianten denkbar.

In einer ersten Ausführungsvariante kann bei einer bestehenden Stromrichtereinheit, die - wie z.B. die Stromrichtereinheit 30 - zur Erzeugung einer Mehrpunktspannung mit einheitlichen Spannungsstufen nach einem Verfahren des Stands der Technik vorgesehen ist, wie oben bereits erörtert die Anzahl der Module 36 pro Zweig 32 um $N_{PWM}$ Module erweitert werden.

In einer zweiten Ausführungsvariante kann bei der Stromrichtereinheit 30 im bestehenden Satz 33 von $N_{SM}$ Modulen 36 eine Untergruppe von $N_{PWM}$ Modulen ausgewählt werden, die dem zweiten, hier unten beschriebenen Steuermodus zugeordnet sind, während die im Satz 33 übrig bleibenden Module 36 grundsätzlich einem herkömmlichen Verfahren, insbesondere dem Standardverfahren zugeordnet werden. Der unten beschriebene Steuermodus kann demnach mit der oben bereits vorgestellten Struktur der Stromrichtereinheit 30 als modularer Direktumrichter aus identischen Modulen 36 realisiert werden.

In beiden Ausführungen liegt bei der Durchführung des zweiten Steuermodus in jedem Stromrichterzweig 32 eine Unterteilung des Satzes 33 von Modulen 36 in zwei Leistungsteilen vor, wobei ein Leistungsteil von $N_{PWM}$ Modulen der Durchführung des zweiten Steuermodus zugeordnet wird (im folgenden "zweiter Leistungsteil" genannt) und eine Leistungsteil mit den übrig bleibenden Modulen der grundsätzlichen Ausführung des ersten Steuermodus (z.B. des Standardverfahrens) zugeordnet wird (im Folgenden "erster Leistungsteil" genannt).

Die Module 36 des zweiten Leistungsteils 48, die zur Erzeugung von uneinheitlichen Stufenspannungen mittels Pulsweitenmodulation verwendet werden, werden im Folgenden auch als "PWM-Module" bezeichnet.. Es wird hierbei der folgenden Nummerierungskonvention gefolgt: die Module 36 des zweiten Leistungsteils 48 werden durch ein Index "x" bezeichnet, wobei x=1... $N_{PWM}$. Die Energiespeicherspannungen im zweiten Leistungsteil 48 werden durch $U_{SC\_PWM}(x)$ bezeichnet.

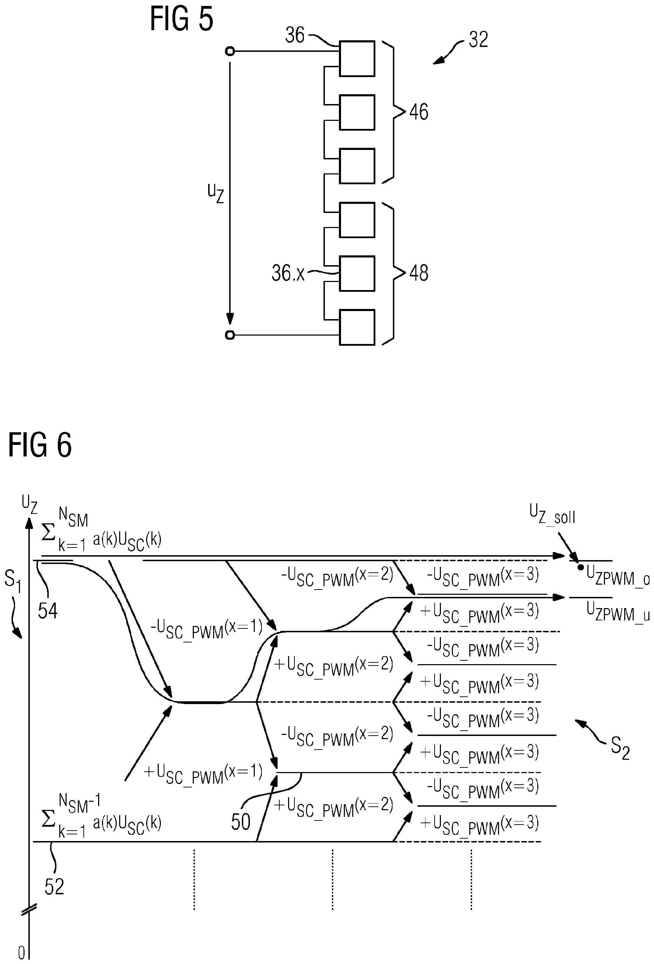

Die Beschreibung des vorgeschlagenen zweiten Steuermodus ist auf der zweiten Variante gestützt und erfolgt am Beispiel der bereits betrachteten Stromrichtereinheit 30. In Figur 5 ist ein Stromrichterzweig 32 der Stromrichtereinheit 30 dargestellt, wobei die oben genannte Verteilung der Module 36 in dem ersten Leistungsteil 46 und dem zweiten Leistungsteil 48 zu erkennen ist.

Der zweite Steuermodus basiert auf einer Regelung der Energiespeicherspannungen $U_{SCj}$ und der Modulausgangsspannungen $u_{SMj}$ in den Modulen 36 des zweiten Leistungsteils 48.

Beim oben beschriebenen Standardverfahren mit Pulsweitenmodulation ist der Sollwert $U_{SCsoll}$ der Energiespeicherspannung für alle am Standardverfahren teilnehmenden Energiespeicher 38 identisch. Dieser Sollwert $U_{SCsoll}$ ist ein Idealwert, wobei das Standardverfahren Abweichungen der individuellen Werte $U_{SCj}$ von diesem idealen Wert berücksichtigt (s. insbesondere Figur 4).

Der Energiespeicherspannungssollwert der Module 36.x, die zur Erzeugung der PWM mit uneinheitlichen Stufenspannungen verwendet werden, ist um Faktoren kleiner:

$$U_{SCsoll\_PWM}(x) \geq U_{SCmax}/2^x \qquad\qquad (6)$$

Wobei $U_{SCmax}$ der maximalen Speicherkondensatorspannung innerhalb des Zweigs 32 entspricht. Damit die PWM-Module 36.x sicher innerhalb der Aussteuergrenzen betrieben werden, sollte die obige Gleichung erfüllt werden.

Es wird nun die Regelung der Speicherkondensatorspannungen $U_{SC\_PWM}(x)$ der PWM-Module 36.x erläutert.

Zur Regelung der Energiespeicherspannungen $U_{SC\_PWM}(x)$ entsprechend Gleichung (6) kann für jedes PWM-Modul 36.x, unabhängig vom Betriebszustand aller anderen Module 36, festgelegt werden, ob in der folgenden PWM-Periode der jeweilige Energiespeicher 38 durch den Zweigstrom $I_Z$ auf- oder entladen werden soll. Das bedeutet, dass unabhängig von der zu realisierenden Summenspannung aller PWM-Module 36.x die Spannungsregelung jedes PWM-Moduls 36.x dessen Ausgangsspannung frei wählen kann. Dies wird unten näher erläutert. Somit kann trotz des relativ geringen Energieinhalts des Energiespeichers 38 der PWM-Module 36.x dessen Spannungswert $U_{SC\_PWM}(x)$ optimal geregelt werden. Dieser stellt sich innerhalb der maximalen Grenzen der Gleichung (7) unten ein.

Berücksichtigt man, dass bei einer üblichen Stromrichterauslegung die maximale Energiespeicherspannungsänderung innerhalb einer PWM-Periode ($\Delta U$) sich im Bereich von 5 bis 10% der Energiespeichernennspannung bewegt, dann kann man anhand der Gleichung (7) erkennen, dass mit 2 bis 3 PWM-Modulen 36.x je Zweig 32 eine betrieblich sinnvolle Grenze erreicht ist. Eine Reduktion des Klirrfaktors der Ausgangs- und Zweigströme um näherungsweise den Faktor $2^{N_{PWM}}$, mit $N_{PWM}$ = 1 bis 3, kann für bestimmte Anwendungen bereits einen bedeutenden Vorteil darstellen.

$$U_{SCmax}/2^x \leq U_{SC\_PWM}(x) \leq U_{SCmax}/2^x + 2\,\Delta U \qquad (7)$$

mit $\Delta U = (I_{Z\_max} / C_{SM}) * T_{PWM}$. Hierbei entspricht $I_{Z\_max}$ dem maximalen Zweigstrom, $T_{PWM}$ der Periodendauer und $C_{SM}$ dem Kapazitätswert des als Speicherkondensator ausgebildeten Energiespeichers 38.

Der zweite Steuermodus in Bezug auf den gesamten Stromrichterzweig 32 wird nun erläutert.

Beim Standardverfahren wird abhängig vom Zweigspannungssollwert $U_{Zsoll}$ und den einzelnen Energiespeicherspannungen $U_{SCj}$ ein beliebiges Modul 36 eines Zweigs 32 zur Einstellung der Zweigspannung $u_{Zx}$ durch Pulsweitenmodulation ausgewählt: Je Stromrichterzweig 32 und PWM-Periode gibt es nur ein Modul 36, dessen Aussteuergrad (a) einen beliebigen Wert zwischen 0 und 1 hat. Alle anderen Module des Zweigs 32 sind entweder über die gesamte PWM-Periode wechselspannungsseitig kurzgeschlossen (a=0) oder ihre Speicherkondensatorspannungen $U_{SCj}$ sind mit der gleichen Polarität, wie die Polarität der Zweigsollspannung, zugeschaltet (|a|=1), siehe oben und die Berechnung der Aussteuergrade a der Module 36 in Figur 4.

Bei dem hier vorgestellten Verfahren zur Erzeugung einer Mehrpunktausgangsspannung mit uneinheitlichen Stufenspannungen gemäß dem zweiten Steuermodus der Steuereinheit 44 werden je Zweig 32 $N_{PWM}$ Module 36.x fest ausgewählt, die mittels Pulsweitenmodulation in jeder PWM-Periode die Differenz zwischen dem Zweigspannungssollwert $U_{Zsoll}$ und der Summenspannung der über die gesamte Periode zugeschalteten Module 36, nämlich die Module 36, die mit dem Aussteuergrad $|a|=1$ betrieben werden, erzeugen.

Mit dem hier vorgestellten Verfahren kann sichergestellt werden, dass in jedem Betriebspunkt alle PWM-Module 36.x, die zur Realisierung der PWM mit uneinheitlichen Stufenspannungen mit verringerter Energiespeicherspannung $U_{SC\_PWM}(x)$ betrieben werden, unabhängig voneinander das Vorzeichen bzw. die Polarität ihrer Modulausgangsspannung $u_{SMj}$ frei wählen können. Dies ist möglich, ohne dass hieraus Einschränkungen bzgl. der Ausgangsspannung bzw. der minimalen Amplitude der Stufenspannung resultieren.

Die Wahl der Polarität der Modulausgangspannungen $u_{SMj}$ erfolgt ferner unabhängig von der Polarität des Zweigspannungssollwerts $U_{Zsoll}$.

Das Verfahren zur Ansteuerung der PWM-Module 36.x wird anhand des Beispiels einer Pulsweitenmodulation eines Zweigs 32 mit drei PWM-Submodulen ($N_{PWM}=3$) vorgestellt:

1. Die Steuerung der Module 36 des ersten Leistungsteils 46 erfolgt mit einer kleinen Ausnahme entsprechend dem Standardverfahren. Die Ausnahme betrifft das nach dem Standardverfahren zuletzt ausgewählte Modul 36, das mit Hilfe der Pulsweitenmodulation die Differenz zum Zweigspannungssollwert $U_{Zsoll}$ einprägen soll. Dieses Submodul hat abweichend vom Standardverfahren nun die Aufgabe, zusammen mit den PWM-Modulen 36.x (Modulen der zweiten Untergruppe 48) die Differenz zum Zweigspannungssollwert $U_{Zsoll}$ einzuprägen (Diese Differenz entspricht der Differenz zwischen dem Zweigspannungssollwert $U_{Zsoll}$ und der Summenspannung der beitragenden Module 36 des ersten Leistungsteils 46, d.h. der Module 36, für welche das Aussteuergrad $|a|=1$ durch das Standardverfahren festgelegt wurde). Für die folgenden Betrachtungen erhält dieses Submodul den PWM-Index $x=0$.

2. Die drei PWM-Module 36.x werden so geregelt, dass ihre Energiespeicherspannungen $U_{SC\_PWM}(x)$ entsprechend Gleichung (6) näherungsweise bei 1/2 ($x=1$), 1/4 ($x=2$) bzw. 1/8 ($x=3$) des Werts der restlichen Energiespeicherspannungen des ersten Leistungsteils (46), insbesondere des Werts der Energiespeicherspannung $U_{SC\_PWM}(x=0)$ des Moduls 36.0, liegen. Das Modul 36.0 weist demnach eine Energiespeicherspannungsamplitude $U_{SC\_PWM}(x=0)$ auf, die gleich der doppelten maximalen Energiespeicherspannungsamplitude $U_{SC\_PWM}(x=1)$ des zweiten Leistungsteils (48) ist. Eine Amplitude $U_{SC\_PWM}(x=0)$, die kleiner als die doppelte maximale Energiespeicherspannungsamplitude des zweiten Leistungsteils ist, ist gemäß der Gleichung (6) ebenfalls möglich.

Die weiteren Verfahrensmerkmale werden nun anhand der Figur 6 erläutert. Diese stellt die Stufenspannungsstruktur, die für die Zweigspannung $U_Z$ durch die Steuereinheit 44 erzeugt werden kann.

Auf der linken Seite entlang der Achse sind die Stufenspannungen dargestellt, die mittels der Module des ersten Leistungsteils 46 erzeugbar sind. Dies entspricht einer ersten Stufenspannungsstruktur $S_1$ mit einheitlichen Stufenspannungen. Innerhalb der Stufenspannungsstruktur $S_1$, d.h. zwischen benachbarten Stufenspannungen der ersten Stufenspannungsstrukturen kann im zweiten Steuermodus durch unterschiedliche Festlegungen der Modulausgangsspannungen des zweiten Leistungsteils 48 eine feinere Stufenspannungsstruktur $S_2$ erzeugt werden:

3. Mit Hilfe der PWM-Module 36.x werden Spannungsstufen 50 erzeugt, die immer zwischen benachbarten Spannungsstufen 52, 54 der restlichen Module 36 des ersten Leistungsteils 46 liegen. Es ist hierbei immer möglich, dass jede Zweigspannungsstufe entkoppelt vom Vorzeichen der Modulausgangsspannungen $u_{PWM}(x)$, für $x \geq 1$, realisiert werden kann. Dies ermöglicht die unabhängige Regelung der Energiespeicherspannungen $U_{SC\_PWM}(x)$ aller PWM-Module 36.x.

Ausgehend vom Zweigspannungssollwert $U_{Zsoll}$ wird bestimmt, welche Spannungsstufen diesen Wert am nächsten annähern. Im betrachteten Beispiel entspricht einer oberen Spannungsstufe $U_{ZPWM\_o}$ der Spannungsstufe 54 und der Zweigspannungssollwert $U_{Zsoll}$ kann von unten durch eine untere Spannungsstufe $U_{ZPWM\_u}$ von unten angenähert werden. Um diese Spannungsstufe gemäß der zweiten Stufenspannungsstruktur $S_2$ werden die Polaritäten der Modulausgangsspannungen der PWM-Module 36.x im zweiten Leistungsteil 48 wie folgt festgelegt: $x=1$: -; $x=2$: +; $x=3$: +. Diese Bestimmung der Polaritäten erfolgt unabhängig von der Polarität der zu erreichenden Zweigspannung.

4. Der Zweigspannungssollwert $U_{Zsoll}$ wird durch eine Mittelung der beiden Spannungsstufen $U_{ZPWM\_o}$ und $U_{ZPWM\_u}$ erzeugt. Damit durch Pulsweitenmodulation die Zweigsollspannung $u_{Zx}$ ausschließlich durch die beiden benachbarten Spannungsstufen $U_{ZPWM\_o}$ und $U_{ZPWM\_u}$ erzeugt wird, muss für jede PWM-Periode eine synchronisierte Umschaltung aller an der Pulsweitenmodulation beteiligten Module 36.x mit $x \geq 0$ erfolgen. Die beiden zur Zweigsollspannung $U_{Zsoll}$ benachbarten Spannungsstufen $U_{ZPWM\_o}$ und $U_{ZPWM\_u}$ müssen so angesteuert werden, dass die Gleichung (8) erfüllt ist:

$$a\ U_{ZPWM\_o}\ +\ (1-a)\ U_{ZPWM\_u}\ =\ U_{Zsoll} \qquad (8)$$

wobei a dem Aussteuergrad der oberen Spannungsstufe $U_{ZPWM\_o}$ entspricht.

Außerdem muss zur Sicherstellung der synchronisierten Umschaltung aller Module 36 zwischen den beiden Spannungsstufen $U_{ZPWM\_o}$ und $U_{ZPWM\_u}$ ein spezielles PWM-Verfahren mit Flankentaktung angewandt werden:

-   die PWM-Signale für die obere Spannungsstufe werden mit einer Sägezahnspannung mit fallender Flanke erzeugt;
-   die
    PWM-Signale für die untere Spannungsstufe werden mit einer Sägezahnspannung mit steigender Flanke erzeugt;
-   die Module, die zur Erzeugung beider Spannungsstufen notwendig sind, bleiben für die gesamte PWM-Periode in einem Schaltzustand.

In dem in Figur 6 abgebildeten Beispiel werden entsprechend dem oben beschriebenen Verfahren alle Module 36 des ersten Leistungsteils 46 über die gesamte PWM-Periode dauerhaft zugeschaltet - dies schließt auch das an der PWM prinzipiell beteiligte Modul 36 mit dem PWM-Index x=0 ein, da es an der Erzeugung beider Spannungsstufen $U_{ZPWM\_o}$ und $U_{ZPWM\_u}$ beteiligt ist. Die Module 36.x des zweiten Leistungsteils 48 mit dem PWM-Index x=1 bis 3 sind ausschließlich an der Erzeugung der unteren Spannungsstufe $U_{ZPWM\_u}$ beteiligt, so dass ihre Ausgangsspannung durch die PWM-Flankentaktung mit steigender Sägezahnspannung erzeugt wird.

Die Steuereinheit 44 weist ferner die Funktion auf, die Zuordnung der Module 36 des Stromrichterzweigs 32 zum ersten bzw. zum zweiten Leistungsteil 46, 48 festzulegen. Dadurch kann diese Zuordnung bei Bedarf durch die Steuereinheit 44 geändert werden.

Die Steuereinheit 44 kann den zweiten Steuermodus zu- und abschalten. Bei abgeschaltetem zweiten Steuermodus wird der erste Steuermodus mit dem ersten Leistungsteil 46 oder mit den vereinigten ersten und zweiten Leistungsteilen 46, 48 durchgeführt. Hierbei werden die Module 36 gemäß dem Standardverfahren zur Erzeugung einheitlicher Spannungsstufen 52, 54 gesteuert.

**Patentansprüche**

1.   Spannungseinstellvorrichtung mit wenigstens einem mehrstufigen Spannungsausgang (34), zumindest einer Stromrichtereinheit (30), die wenigstens einen ersten Leistungsteil (46) mit einem Satz von Modulen (36) aufweist, welcher zumindest einen Teil eines Stromrichterzweigs (32) bildet, und einer Steuereinheit (44), die den ersten Leistungsteil (46) zur Bereitstellung einer Zweigspannung ($U_Z$) gemäß einer ersten Spannungsstufenstruktur ($S_1$) mit einheitlichen Spannungsstufen (52, 54) steuert,
     wobei die Stromrichtereinheit (30) zumindest einen zweiten Leistungsteil (48) umfasst, der mit dem ersten Leistungsteil (46) den Stromrichterzweig (32) bildet und eine Gruppe von Modulen (36.x) aufweist, die jeweils zumindest einen Energiespeicher (38), eine Schaltergruppe (VB) und einen Modulausgang (40) aufweisen, und die Steuereinheit (44) in zumindest einem Steuermodus dazu vorgesehen ist, zumindest die Gruppe von Modulen (36.x) zur Bereitstellung der Zweigspannung ($U_Z$) im Zusammenwirken mit dem ersten Leistungsteil (46) gemäß einer zweiten, gegenüber der ersten Spannungsstufenstruktur ($S_1$) feineren Spannungsstufenstruktur ($S_2$) mit uneinheitlichen Stufenspannungen zu steuern,
     wobei der erste Leistungsteil (46) und der zweite Leistungsteil (48) identische Module (36, 36.x) aufweisen, und
     wobei im Steuermodus die Zweigspannung ($U_Z$) gemäß einem zu erreichenden Zweigspannungssollwert ($U_{Zsoll}$) durch ein Modulationsverfahren erzeugt wird, wobei während einer Modulationsperiode der erste Leistungsteil (46) zu einem Anteil des Zweigspannungssollwerts ($U_{Zsoll}$) gemäß der ersten Stufenspannungsstruktur ($S_1$) beiträgt und die Module (36.x) des zweiten Leistungsteils (48) die Differenz des Anteils zum Zweigspannungssollwert ($U_{Zsoll}$) durch Modulation erzeugen.

2.   Spannungseinstellvorrichtung nach Anspruch 1,
     **dadurch gekennzeichnet, dass** die Steuereinheit (44) dazu vorgesehen ist, eine Zuordnung zumindest eines Moduls (36) des Stromrichterzweigs (32) zum ersten bzw. zum zweiten Leistungsteil (46, 48) zu ändern.

3.   Spannungseinstellvorrichtung nach einem der vorhergehenden Ansprüche,
     **dadurch gekennzeichnet, dass** Module (36.x) zumindest des zweiten Leistungsteils (48) jeweils zur Erzeugung einer bipolaren Modulausgangsspannung ($u_{SMj}$) vorgesehen sind.

**4.** Spannungseinstellvorrichtung nach einem der vorhergehenden Ansprüche, **dadurch gekennzeichnet, dass** zumindest eine Schaltergruppe (VB) als Brückenschaltung ausgebildet ist.

**5.** Spannungseinstellvorrichtung nach Anspruch 1, **dadurch gekennzeichnet, dass** die Steuereinheit (44) abhängig vom Zweigspannungssollwert ($U_{Zsoll}$) und gemäß der ersten Spannungsstufenstruktur ($S_1$) Module (36) des ersten Leistungsteils (46) ermittelt, die während der Modulationsperiode zur Zweigspannung ($U_Z$) beitragen.

**6.** Spannungseinstellvorrichtung nach Anspruch 1 oder 5, **dadurch gekennzeichnet, dass** die Steuereinheit (44) gemäß der zweiten Spannungsstufenstruktur ($S_2$) eine Kombination der Modulausgangsspannungen ($u_{SMj}$) des zweiten Leistungsteils (48) für die Modulationsperiode festlegt, wobei die Polarität der individuellen Modulausgangsspannungen ($u_{SMj}$) während der Modulationsperiode unabhängig vom Zweigspannungssollwert ($U_{Zsoll}$) ist.

**7.** Spannungseinstellvorrichtung nach Anspruch 1, 5 oder 6, **dadurch gekennzeichnet, dass** die Energiespeicher (38) des zweiten Leistungsteils (48) während der Modulationsperiode unterschiedliche Spannungen ($U_{SC\_PWM}(x)$) aufweisen.

**8.** Spannungseinstellvorrichtung nach Anspruch 7, **dadurch gekennzeichnet, dass** während der Modulationsperiode zumindest ein Modul (36.0) des ersten Leistungsteils (46) eine Energiespeicherspannungsamplitude ($U_{SCsoll\_PWM}(0)$) aufweist, die kleiner gleich der doppelten maximalen Energiespeicherspannungsamplitude ($U_{SCsoll\_PWM}(1)$) des zweiten Leistungsteils (48) ist.

**9.** Spannungseinstellvorrichtung nach einem der vorhergehenden Ansprüche, **dadurch gekennzeichnet, dass** zur Erzeugung der Zweigspannung ($U_Z$) gemäß dem Zweigspannungssollwert ($U_{Zsoll}$) zwei dem Spannungssollwert ($U_{Zsoll}$) am nächsten gelegene Spannungsstufen ($U_{ZPWM\_u}$, $U_{ZPWM\_o}$) ermittelt werden und eine zeitliche Mittelung der Spannungsstufen ($U_{ZPWM\_u}$, $U_{ZPWM\_o}$) durch eine PWM-Flankentaktung über die Modulationsperiode den Zweigspannungssollwert ($U_{Zsoll}$) abbildet.

**10.** Spannungseinstellvorrichtung nach einem der vorhergehenden Ansprüche, **dadurch gekennzeichnet, dass** die Energiespeicher (38) als Speicherkondensatoren ausgebildet sind.

**11.** Spannungseinstellvorrichtung nach einem der vorhergehenden Ansprüche, **dadurch gekennzeichnet, dass** der Steuermodus zu- und abschaltbar ist.

**12.** Verfahren zur Bereitstellung einer elektrischen Spannung mittels einer Spannungseinstellvorrichtung, die wenigstens einen mehrstufigen Spannungsausgang (34) aufweist, bei welchem

- ein erster Leistungsteil (46) mit einem Satz von Modulen (36), der zumindest einen Teil eines Stromrichterzweigs (32) bildet, zur Bereitstellung einer Zweigspannung ($U_Z$) gemäß einer ersten Spannungsstufenstruktur ($S_1$) mit einheitlichen Spannungsstufen (52, 54) gesteuert wird,
- zumindest ein zweiter Leistungsteil (48), der mit dem ersten Leistungsteil den Stromrichterzweig (32) bildet und eine Gruppe von Modulen (36.x) umfasst, die jeweils zumindest einen Energiespeicher (38), eine Schaltergruppe (VB) und einen Modulausgang (40) aufweisen, gesteuert wird, wobei zumindest die Gruppe von Modulen (36.x) zur Bereitstellung der Zweigspannung ($U_Z$) im Zusammenwirken mit dem ersten Leistungsteil (46) gemäß einer zweiten, gegenüber der ersten Spannungsstufenstruktur ($S_1$) feineren Spannungsstufenstruktur ($S_2$) mit uneinheitlichen Stufenspannungen gesteuert wird, wobei der erste Leistungsteil (46) und der zweite Leistungsteil (48) identische Module (36, 36.x) aufweisen, und wobei im Steuermodus die Zweigspannung ($U_Z$) gemäß einem zu erreichenden Zweigspannungssollwert ($U_{Zsoll}$) durch ein Modulationsverfahren erzeugt wird, wobei während einer Modulationsperiode der erste Leistungsteil (46) zu einem Anteil des Zweigspannungssollwerts ($U_{Zsoll}$) gemäß der ersten Stufenspannungsstruktur ($S_1$) beiträgt und die Module (36.x) des zweiten Leistungsteils (48) die Differenz des Anteils zum Zweigspannungssollwert ($U_{Zsoll}$) durch Modulation erzeugen.

**Claims**

**1.** Voltage setting device comprising at least one multi-step voltage output (34), at least one power converter unit (30), which has at least one first power section (46) having a set of modules (36), which forms at least a section of a power converter branch (32), and a control unit (44), which controls the first power section (46) for providing a branch voltage ($U_Z$) in accordance with a first voltage step structure ($S_1$) having uniform voltage steps (52, 54), wherein the power converter unit (30) comprises at least one second power section (48) which, with the first power section (46), forms the power converter branch (32) and has a group of modules (36.x), which each have at least one energy store (38), a switch group (VB) and a module output (40), and the control unit (44) in at least one control mode is intended to control at least the group of modules (36.x) for providing the branch voltage ($U_Z$) in interaction with the first power section (46) in accordance with a second voltage step structure ($S_2$), having nonuniform step voltages, which is finer than the first voltage step structure ($S_1$), wherein the first power section (46) and the second power section (48) have identical modules (36, 36.x), and wherein, in the control mode, the branch voltage ($U_Z$) is generated by a modulation method in accordance with a branch voltage setpoint value ($U_{Zset}$) to be achieved, wherein, during a modulation period, the first power section (46) contributes to a proportion of the branch voltage setpoint value ($U_{Zset}$) in accordance with the first step voltage structure ($S_1$), and the modules (36.x) of the second power section (48) generate the difference of the proportion with respect to the branch voltage setpoint value ($U_{Zset}$) by modulation.

2.  Voltage setting device according to Claim 1,
    **characterized in that** the control unit (44) is intended to change an assignment of at least one module (36) of the power converter branch (32) to the first or the second power section (46, 48).

3.  Voltage setting device according to one of the preceding claims,
    **characterized in that** modules (36.x) of at least the second power section (48) are each intended to generate a bipolar module output voltage ($u_{SMj}$).

4.  Voltage setting device according to one of the preceding claims,
    **characterized in that** at least one switch group (VB) is in the form of a bridge circuit.

5.  Voltage setting device according to Claim 1, **characterized in that** the control unit (44) determines modules (36) of the first power section (46) which contribute to the branch voltage ($U_Z$) during the modulation period depending on the branch voltage setpoint value ($U_{Zset}$) and in accordance with the first voltage step structure ($S_1$).

6.  Voltage setting device according to Claim 1 or 5,
    **characterized in that** the control unit (44) establishes a combination of the module output voltages ($u_{SMj}$) of the second power section (48) for the modulation period in accordance with the second voltage step structure ($S_2$), wherein the polarity of the individual module output voltages ($u_{SMj}$) is independent of the branch voltage setpoint value ($U_{Zset}$) during the modulation period.

7.  Voltage setting device according to Claim 1, 5 or 6,
    **characterized in that** the energy stores (38) of the second power section (48) have different voltages ($U_{SC\_PWM}(x)$) during the modulation period.

8.  Voltage setting device according to Claim 7,
    **characterized in that**, during the modulation period, at least one module (36.0) of the first power section (46) has an energy store voltage amplitude ($U_{SCSet\_PWM}(0)$) which is less than or equal to twice the maximum energy store voltage amplitude ($U_{SCset\_PWM}(1)$) of the second power section (48).

9.  Voltage setting device according to one of the preceding claims, **characterized in that**, in order to generate the branch voltage ($U_Z$) in accordance with the branch voltage setpoint value ($U_{Zset}$), two voltage steps ($U_{ZPWM\_u}$, $U_{ZPWM\_o}$) closest to the voltage setpoint value ($U_{Zset}$) are determined, and averaging over time of the voltage steps ($U_{ZPWM\_u}$, $U_{ZPWM\_o}$) by virtue of PWM edge clocking over the modulation period maps the branch voltage setpoint value ($U_{Zset}$).

10. Voltage setting device according to one of the preceding claims,
    **characterized in that** the energy stores (38) are in the form of storage capacitors.

11. Voltage setting device according to one of the preceding claims,
    **characterized in that** the control mode can be switched on and off.

12. Method for providing an electrical voltage by means of a voltage setting device which has at least one multi-step voltage output (34), in which method

- a first power section (46), having a set of modules (36), which forms at least a section of a power converter branch (32), is controlled for providing a branch voltage ($U_Z$) in accordance with a first voltage step structure ($S_1$) having uniform voltage steps (52, 54),

- at least one second power section (48) which, with the first power section, forms the power converter branch (32) and comprises a group of modules (36.x) which each have at least one energy store (38), a switch group (VB) and a module output (40), is controlled, wherein at least the group of modules (36.x) is controlled for providing the branch voltage ($U_Z$) in interaction with the first power section (46) in accordance with a second voltage step structure ($S_2$), having nonuniform step voltages, which is finer than the first voltage step structure ($S_1$),

wherein the first power section (46) and the second power section (48) have identical modules (36, 36.x), and wherein, in the control mode, the branch voltage ($U_Z$) is generated by a modulation method in accordance with a branch voltage setpoint value ($U_{Zset}$) to be achieved, wherein, during a modulation period, the first power section (46) contributes to a proportion of the branch voltage setpoint value ($U_{Zset}$) in accordance with the first step voltage structure ($S_1$), and the modules (36.x) of the second power section (48) generate the difference of the proportion with respect to the branch voltage setpoint value ($U_{Zset}$) by modulation.

## Revendications

1. Montage de réglage de tension ayant au moins une sortie (34) de tension à plusieurs étages, au moins une unité (30) de convertisseur, qui a au moins une première partie (46) de puissance ayant un jeu de modules (36) formant au moins une partie d'une branche (32) du convertisseur, et une unité (44) de commande, qui commande la première partie (46) de puissance pour la mise à disposition d'une tension ($U_z$) de branche suivant une première structure ($S_1$) en étages de tension ayant des étages (52, 54) uniformes de tension,

dans lequel l'unité (30) de convertisseur comprend au moins une deuxième partie (48) de puissance, qui forme, avec la première partie (46) de puissance, la branche (32) de convertisseur et a un groupe de modules (36.x), qui ont chacun au moins un accumulateur (38) d'énergie, un groupe (VB) d'interrupteurs et une sortie (40) de module, et l'unité (44) de commande est prévue dans au moins un mode de commande pour commander au moins le groupe de modules (36.x) pour la mise à disposition de la tension ($U_z$) de branche, en coopération avec la première partie (46) de puissance suivant une deuxième structure ($S_2$) en étages de tension plus fine que la première structure ($S_1$) en étages de tension et ayant des tensions en étages non uniformes,

dans lequel la première partie (46) de puissance et la deuxième partie (48) de puissance ont des modules (36, 36.x) pareils, et dans lequel, dans le mode de commande, la tension ($U_z$) de branche est produite par un procédé de modulation conformément à une valeur ($U_{zsoll}$) de consigne de tension de branche à obtenir, dans lequel, pendant une période de modulation, la première partie (46) de puissance contribue à une proportion de la valeur ($U_{zsoll}$) de consigne de tension de branche suivant la première structure ($S_1$) de tension en étages et les modules (36.x) de la deuxième partie (48) de puissance produisent, par modulation, la différence de la proportion à la valeur ($U_{zsoll}$) de consigne de tension de branche.

2. Montage de réglage de tension suivant la revendication 1,
**caractérisé en ce que** l'unité (44) de commande est prévue pour modifier une association d'au moins un module (36) de la branche (32) du convertisseur à la première ou à la deuxième partie (46, 48) de puissance.

3. Montage de réglage de tension suivant l'une des revendications précédentes,
**caractérisé en ce que** des modules (36.x) d'au moins la deuxième partie (48) de puissance sont prévus chacun pour la production d'une tension ($U_{SMj}$) de sortie de module bipolaire.

4. Montage de réglage de tension suivant l'une des revendications précédentes,
**caractérisé en ce qu'**au moins un groupe (VB) d'interrupteurs est constitué en circuit en pont.

5. Montage de réglage de tension suivant la revendication 1,
**caractérisé en ce que** l'unité (44) de commande contribue, en fonction de la valeur ($U_{zsoll}$) de consigne de tension de branche et selon la première structure ($S_1$) en étages de tension, à déterminer des modules (36) de la première partie (46) de puissance, qui contribuent à la tension ($U_z$) de branche pendant la période de modulation.

6. Montage de réglage de tension suivant la revendication 1 ou 5,
**caractérisé en ce que** l'unité (44) de commande fixe, suivant la deuxième structure ($S_2$) en étages de tension, une combinaison des tension ($U_{SMj}$) de tension de sortie de module de la deuxième partie (48) de puissance pour la période de modulation, la polarité des tensions ($U_{SMj}$) de sortie de module individuelles pendant la période de modulation étant indépendante de la valeur ($U_{zsoll}$) de consigne de tension de branche.

7. Montage de réglage de tension suivant la revendication 1, 5 ou 6,
**caractérisé en ce que** les accumulateurs (38) d'énergie de la deuxième partie (48) de puissance ont des tensions ($U_{SC\_PWM}(x)$) différentes pendant la période de modulation.

8. Montage de réglage de tension suivant la revendication 7,
**caractérisé en ce que**, pendant la période de modulation, au moins un module (36.0) de la première partie (46) de puissance a une amplitude ($U_{SCsoll\_PWM}(0)$) de tension d'accumulateur d'énergie, qui est plus petite que le double de l'amplitude ($U_{SCsoll\_PWM}(1)$) maximum de la tension d'accumulateur d'énergie de la deuxième partie (48) de puissance.

9. Montage de réglage de tension suivant l'une des revendications précédentes,
**caractérisé en ce que**, pour produire la tension ($U_Z$) de branche suivant la valeur ($U_{zsoll}$) de consigne de tension de branche, deux des étages ($U_{ZPWM\_u}$, $U_{ZPWM\_O}$) de tension les plus proches de la valeur ($U_{zsoll}$) de consigne de tension de branche sont déterminés et une moyenne dans le temps des étages ($U_{ZPWM\_u}$, $U_{ZPWM\_O}$) de tension reproduit la valeur ($U_{zsoll}$) de consigne de tension de branche par un cadencement de flanc PWM sur la période de modulation.

10. Montage de réglage de tension suivant l'une des revendications précédentes,
**caractérisé en ce que** les accumulateurs (38) d'énergie sont conformés en condensateurs d'accumulation.

11. Montage de réglage de tension suivant l'une des revendications précédentes,
**caractérisé en ce que** le mode de commande peut être branché et débranché.

12. Procédé de mise à disposition d'une tension électrique au moyen d'un montage de réglage de tension, qui a au moins une sortie (34) de tension à plusieurs étages, dans lequel

- on commande une première partie (46) de puissance ayant un jeu de modules (36), qui forme au moins une partie d'une branche (32) de convertisseur, pour la mise à disposition d'une tension ($U_Z$) de branche suivant une première structure ($S_1$) d'étages de tension, ayant des étages (52, 54) de tension uniformes,
- on commande au moins une deuxième partie (48) de puissance, qui forme avec la première partie de puissance la branche (32) du convertisseur et qui comprend un groupe de modules (36.x), qui ont chacun au moins un accumulateur (38) d'énergie, un groupe (VB) d'interrupteurs et une sortie (40) de module, dans lequel on commande au moins le groupe de modules (36.x) pour la mise à disposition de la tension ($U_Z$) de branche, en coopération avec la première partie (46) de puissance suivant une deuxième structure ($S_2$) en étages de tension plus fine que la première structure ($S_1$) en étages de tension et ayant des tensions en étages non uniformes, dans lequel la première partie (46) de puissance et la deuxième partie (48) de puissance ont des modules (36, 36.x) pareils, et dans lequel, dans le mode de commande, la tension ($U_Z$) de branche est produite par un procédé de modulation suivant une valeur ($U_{zsoll}$) de consigne de tension de branche à obtenir, dans lequel, pendant une période de modulation, la première partie (46) de puissance contribue à une proportion de la valeur ($U_{zsoll}$) de consigne de tension de branche suivant la première structure ($S_1$) de tension en étages et les modules (36.x) de la deuxième partie (48) de puissance produisent, par modulation, la différence de la proportion à la valeur ($U_{zsoll}$) de consigne de tension de branche.

FIG 1

FIG 2

# FIG 3

# FIG 4

S10

S12

S14

S15

$$U_{Zsoll}$$
$$VZ = U_{Zsoll}/|U_{Zsoll}|$$

S16  S20

$P_{Zsoll}(n_{PWM}+1) < 0$

$P_{Zsoll}(n_{PWM}+1) \geq 0$

$$k = N_{SM}$$
$$U_{ZPWM} = 0$$

$$k = 0$$
$$U_{ZPWM} = 0$$

$$U_{ZPWM} = U_{ZPWM} + U_{SCj(k)}$$
$$a_{j(k)} = 1 \cdot VZ$$

$$U_{ZPWM} = U_{ZPWM} + U_{SCj(k)}$$
$$a_{j(k)} = 1 \cdot VZ$$

$$k = k-1$$

$$k = k+1$$

$$U_{ZPWM} < |U_{Zsoll}|$$

$$U_{ZPWM} < |U_{Zsoll}|$$

$$U_{ZPWM} \geq |U_{Zsoll}|$$

$$U_{ZPWM} \geq |U_{Zsoll}|$$

$$a_{j(k)} = (|U_{Zsoll}| - U_{ZPWM} + U_{SCj(k)})/U_{SCj(k)} \cdot VZ$$

$$a_{j(k)} = (|U_{Zsoll}| - U_{ZPWM} + U_{SCj(k)})/U_{SCj(k)} \cdot VZ$$

$k > 0$

$k < N_{SM}$

$$a_{j(k)} = 0$$

$$k = k-1$$

$$a_{j(k)} = 0$$

$$k = k+1$$

$k > 0$

$k < N_{SM}$

$k = 0$  $k = 0$  $k > 0$

$k = N_{SM}$  $k = N_{SM}$  $k < N_{SM}$

S18

S22

S24

S26

# FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19721450 C1